# EUROPÄISCHE PATENTSCHRIFT

(11) **EP 3 053 566 B1**
(45) Veröffentlichungstag und Bekanntmachung des Hinweises auf die Patenterteilung: **24.01.2018**
(21) Anmeldenummer: 16153932.5
(22) Anmeldetag: 02.02.2016
(51) Int. Cl.: A61G 7/05

(54) **VORRICHTUNG ZUR REDUZIERUNG DER GERÄUSCHINTENSITÄT EINES BREMSSYSTEMS VON ROLLEN EINES KRANKENHAUSBETTES**
DEVICE FOR REDUCING THE NOISE INTENSITY OF A BRAKE SYSTEM FROM ROLLERS OF A HOSPITAL BED
DISPOSITIF DE REDUCTION DE L'INTENSITE DU BRUIT D'UN SYSTEME DE FREIN DE ROULEAUX D'UN LIT MEDICALISE

(30) Priorität: 05.02.2015 DE 202015100563 U
(43) Veröffentlichungstag der Anmeldung: 10.08.2016
(73) Patentinhaber: Linet Spol. S.R.O., 27401 Slany (CZ)
(72) Erfinder: Kolár, Vladímír, 27401 Slaný (CZ)
(74) Vertreter: Graefe, Jörg

(56) Entgegenhaltungen:
- DE-A1-102011 052 663
- DE-U1-202005 011 142
- JP-A- 2014 000 910
- US-A- 4 722 114

## Beschreibung

### Technisches Gebiet

Die technische Lösung betrifft eine technische Verbesserung eines Nockens eines Bremsmechanismus einer Bettrolle in der Weise, dass die Geräuschintensität des Bremsmechanismus beim Niedertreten eines Bremspedals der Bettrolle erheblich reduziert wird.

### Bisheriger Stand der Technik

Für Krankenhausbetten werden mechanische Bremssysteme für die Rollen benutzt, die am Untergestell des Bettes angebracht sind. Der Bremsmechanismus besteht aus einer Stange zur Kraftübertragung, einem Nocken, einem Anpresselement mit Feder, das an einen Gewindestopfen befestigt ist, an dessen Ende ein Feststellfuß angebracht ist. Bei diesen mechanischen Bremssystemen werden Ganzmetallnocken verwendet. Zum Bremsen und zum Lösen der Bremse des Betts kommt es durch ein Niedertreten eines Bremshebels. Der Bremshebel dreht den Nocken so, dass es zum Zusammendrücken des Anpresselements kommt, an dessen Ende ein Feststellfuß angebracht ist. Beim Zusammendrücken des Anpresselements kommt es zum Einrasten dieses Elements in eine der Rastnischen des Nockens. Es kommt zum Anstoßen des metallischen Anpresselements an den Metallnocken. Dieses Anstoßen wird weiter auf die Kontaktfläche des Bremshebels übertragen. Diese ist in der Mitte des Nockens platziert. Auf diese Weise entsteht außerhalb des Bremsmechanismus dieser Rollen ein Geräusch.

Dieses Geräusch, das der Bremsmechanismus auslöst, ist sehr unkomfortabel und unangenehm. Im Falle der Aufstellung mehrerer Betten mit diesem Bremsmechanismus in einem Zimmer kommt es im Falle einer Verschiebung zu einem unangenehmen störenden Geräusch beim Lösen der Bremse und beim Feststellen der Bremse.

Eine ausführliche Beschreibung dieses Mechanismus des Bremssystems geht vom derzeitigen Stand der Technik aus, der z.B. im Patent US4722114 beschrieben ist.

### Das Prinzip der technischen Lösung

Die technische Lösung betrifft eine Vorrichtung zur Reduzierung der Geräuschintensität des Bremsmechanismus der Rolle am Untergestell des Betts. Der Bremsmechanismus der Rollen des Krankenhausbetts besteht aus einem Hebelmechanismus zum Lösen der Bremse des Betts, einer Stange zur Kraftübertragung, einem Nocken und einem Anpresselement mit Feder, das an einem Gewindestopfen befestigt ist, an dessen Ende ein Feststellfuß angebracht ist, der beim Feststellen der Bremse so auf die Rolle aufsetzt, dass die angehalten wird oder umgekehrt. Die Geräuschreduzierung wird durch den Austausch des bestehenden einteiligen Metallnockens gegen einen aus mehreren Teilen bestehenden Nocken gelöst. Der mehrteilige Nocken besteht aus dem Nockenkörper und zwei Abstandselementen. Diese zwei Abstandselemente bestehen vorzugsweise aus Kunststoff- (bzw. elastischem) Material. Beim Niedertreten des Bremshebels kommt es zum Einrasten des Anpresselements in eine von zwei Einrastöffnungen. Diese Öffnungen werden teilweise durch die oben genannten Abstandselemente überdeckt, wodurch der Anstoß des Anpresselements in den Metallteil des Nockens gedämpft wird. Durch diese Dämpfung wird auch der übertragene Druck auf die Kontaktfläche des Bremshebels gedämpft, die in der inneren Öffnung des Nockens angeordnet ist.

Damit wird ein erheblicher Dämpfungseffekt beim Abbremsen und beim Lösen der Bremse des Krankenhausbetts erzielt.

### Übersicht der zeichnerischen Abbildungen

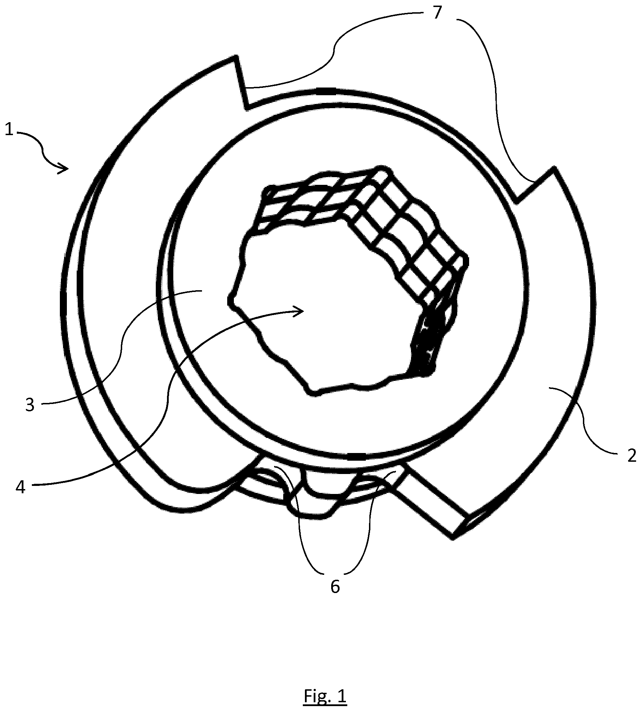

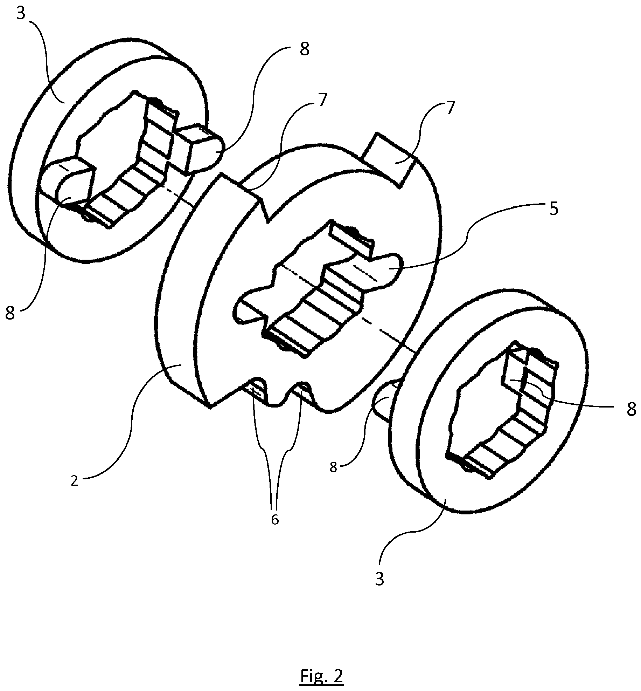

Abb. 1 stellt den Nockenaufbau dar. Abb. 2 stellt die einzelnen Komponenten des Nockens und deren Anordnung zueinander dar.

### Beispiele der Ausführung der technischen Lösung

Der Nocken 1 weist den Körper 2 des Nockens 1 und zwei Abstandselementen 3 auf. Der Körper 2 des Nockens 1 weist eine mittige Öffnung 4 mit zwei Ausschnitten 5 zur Fixierung der zwei Abstandselemente 3 auf. Der Umfang des Körpers 2 des Nockens 1 weist zwei Rastnischen 6 und zwei Anschläge 7 auf. Im Kontakt mit dem Körper 2 des Nockens 1 sind die zwei Abstandselemente 3, die an einer Seite zwei Vorsprünge 8 zur Befestigung des Abstandselements 3 am Körper 2 des Nockens 1 haben.

Am Körper 2 des Nockens 1 sind die Rastnischen 6 und die Anschläge 7 vorzugsweise so einander gegenüber angeordnet, dass die Feststellbewegung des Bremsmechanismus zum ausreichend schnellen und leichten Abbremsen des Betts und zum Lösen der Bremse führt. Diese Rastnischen 6 und die Anschläge 7 können einen unterschiedlichen Abstand voneinander haben.

Bestandteil der mittigen Öffnung 4 des Körpers 2 des Nockens 1 ist die mittige Öffnung 4 mit zwei Ausschnitten 5 zur Befestigung der Abstandelemente 3 mit Hilfe der Vorsprünge 8 in den Körper 2 des Nockens 1. Diese Ausschnitte 5 sind vorzugsweise gegenüber angeordnet. In alternativer Ausführung ist auch eine andere Anordnung am Umfang der mittigen Öffnung 4 des Körpers 2 des Nockens 1 in der Weise möglich, dass die Abstandselemente 3 zu Bestandteilen des Körpers 2 des Nockens 1 werden.

Die Abstandselemente 3 haben am Umfang einer Seite zwei Vorsprünge 8, durch welche die Befestigung der Abstandselemente 3 am Körper 2 des Nockens 1 gewährleistet wird. Alternativ können die Abstandselemente 3 am Körper 2 des Nockens 1 auch durch einen Vorsprung 8 befestigt werden oder ohne Vorsprünge 8 unlösbar am Körper 2 des Nockens 1 befestigt sein.

Der Körper 2 des Nockens 1 ist vorzugsweise aus Metall, und die Abstandselemente 3 sind vorzugsweise aus Kunststoffmaterial hergestellt, sodass es zur Verteilung des Stoßes auf den Körper 2 des Nockens 1 und die Kontaktfläche des Hebelmechanismus des Bremssystems kommt. Die Abstandselemente 3 können in alternativer Ausführung aus elastischem Material oder aus einem anderen Material hergestellt werden, wodurch ein analoger Effekt, d.h. eine Reduzierung der Geräuschintensität des Bremssystems, erreicht wird.

Die Form der Abstandselemente 3 ist vorzugsweise kreisförmig. In alternativer Ausführung korrespondiert die Form der Abstandselemente 3 mit der Form des Körpers 2 des Nockens 1 oder seiner Teile.

Die Abmessungen der Abstandselemente 3 unterscheiden sich vorzugsweise von den Abmessungen des Körpers 2 des Nockens 1. Der Außendurchmesser der Abstandselemente 3 ist größer als der Körper 2 des Nockens 1 und überragt dessen Ränder so, dass das Anpresselement an der Stelle der Rastnischen 6 nicht eng am Metallkörper 2 des Nockens 1 anliegt. Der Innendurchmesser der Abstandselemente 3 ist kleiner als der Innendurchmesser der mittigen Öffnung 4 im Körper 2 des Nockens 1, und es kommt nicht zu einem direkten Kontakt des Hebels des Bremsmechanismus mit dem Körper 2 des Nockens 1. Durch diese Anordnung wird eine erhebliche Reduzierung der Geräuschintensität des Bremssystems erzielt.

Eine alternative Lösung zur Reduzierung der Geräuschintensität des mechanischen Bremssystems der Rollen der Krankenhausbetten ist der Ersatz des bestehenden Ganzmetallnockens 1 durch einen aus Kunststoffmaterial hergestellten Nocken 1, wodurch es zur Abdämpfung des Anstoßens des Anpresselements an den Hebel des Bremsmechanismus kommt. Des Weiteren kommt es auch zur Abdämpfung des durch das Anstoßen von Metall auf Metall hervorgerufenen Geräuschs, sei es nun durch den Aufprall des Anpresselements auf den Nocken 1 oder von einer sekundären Lärmquelle, wenn das Geräusch beim Zusammenprall zwischen dem Nocken 1 und dem Hebel des Bremsmechanismus entsteht.

Eine weitere alternative Lösung zur Reduzierung der Geräuschintensität des mechanischen Bremssystems der Rollen der Krankenhausbetten ist das Aufsetzen eines O-Rings aus elastischem Material auf das bestehende Begrenzungselement des Ganzmetallnockens 1, wodurch es zur Abdämpfung des Aufpralls des Anpresselements auf den Nocken 1 kommt.

## Patentansprüche

1. Vorrichtung zur Reduzierung der Geräuschintensität eines mechanischen Bremssystems von Rollen von Krankenhausbetten, die einen Hebelmechanismus zum Lösen einer Bremse des Betts, eine Stange zur Kraftübertragung und einen Nocken (1) enthält, **dadurch gekennzeichnet, dass** der Nocken (1) einen Körper (2) des Nockens (1) und mindestens ein Abstandselement (3) aufweist, wobei der Körper (2) des Nockens (1) eine mittige Öffnung (4) mit mindestens einem Ausschnitt (5) zur Fixierung mindestens eines Abstandselements (3) hat, und der Umfang des Körpers (2) des Nockens (1) zumindest durch mindestens eine Rastnische (6) und mindestens einen Anschlag (7) gebildet ist, und im Kontakt mit dem Körper (2) des Nockens (1) mindestens ein Abstandselement (3) mit mindestens einem Vorsprung (8) zur Fixierung des Abstandselements (3) erforderlich ist.

2. Vorrichtung zur Reduzierung der Geräuschintensität des mechanischen Bremssystems der Rollen von Krankenhausbetten nach Anspruch 1, **dadurch gekennzeichnet, dass** der Körper (2) des Nockens (1) eine mittige Öffnung (4) mit Ausschnitten (5) hat, die entlang des Umfangs der mittigen Öffnung (4) so angeordnet sind, dass die Vorsprünge (8) des Abstandselements (3) in den Körper (2) des Nockens (1) einrasten.

3. Vorrichtung zur Reduzierung der Geräuschintensität des mechanischen Bremssystems der Rollen von Krankenhausbetten nach Anspruch 1, **dadurch gekennzeichnet, dass** mindestens ein Abstandselement (3) durch ein Kunststoffelement gebildet wird.

4. Vorrichtung zur Reduzierung der Geräuschintensität des mechanischen Bremssystems der Rollen von Krankenhausbetten nach Anspruch 1, **dadurch gekennzeichnet, dass** mindestens ein Abstandselement (5) durch ein elastisches Element gebildet wird.

5. Vorrichtung zur Reduzierung der Geräuschintensität des mechanischen Bremssystems der Rollen von Krankenhausbetten nach Anspruch 1, **dadurch gekennzeichnet, dass** das Abstandselement (3) an einer Seite zwei Vorsprünge (8) hat.

6. Vorrichtung zur Reduzierung der Geräuschintensität des mechanischen Bremssystems der Rollen von Krankenhausbetten nach Anspruch 1, **dadurch gekennzeichnet, dass** sich die Abmessung des Abstandselements (3) von der des Körpers (2) des Nockens (1) unterscheidet.

7. Vorrichtung zur Reduzierung der Geräuschintensität des mechanischen Bremssystems der Rollen von Krankenhausbetten nach Anspruch 6, **dadurch gekennzeichnet, dass** die Außenabmessung der Abstandselemente (3) größer als der Körper (2) des Nockens (1) ist und dessen Rand an der Stelle der Rastnischen (6) überragt.

8. Vorrichtung zur Reduzierung der Geräuschintensität des mechanischen Bremssystems der Rollen von Krankenhausbetten nach Anspruch 6, **dadurch gekennzeichnet, dass** der Innendurchmesser des Ausschnitts der Abstandselemente (3) kleiner als der Innendurchmesser der mittigen Öffnung (4) im Körper (2) des Nockens (1) ist.

## Claims

1. Device for reducing the noise intensity of a mechanical brake system of casters of hospital beds, comprising a lever mechanism for releasing a brake of the bed, a rod for load transmission and a cam (1), **characterised in that** the cam (1) comprises a body (2) of the cam (1) and at least one spacer element (3), wherein the body (2) of the cam (1) has a central opening (4) with at least one cutout (5) for the fixation of at least one spacer element (3), and the circumference of the body (2) of the cam (1) is formed at least by at least one latching recess (6) and at least one stop (7), and at least one spacer element (3) with at least one projection (8) is required for fixation of the spacer element (3) in contact with the body (2) of the cam (1).

2. Device for reducing the noise intensity of the mechanical brake system of the casters of hospital beds according to claim 1, **characterised in that** the body (2) of the cam (1) has a central opening (4) with cutouts (5) which are arranged along the circumference of the central opening (4) such that the projections (8) of the spacer element (3) lock into the body (2) of the cam (1).

3. Device for reducing the noise intensity of the mechanical brake system of the casters of hospital beds according to claim 1, **characterised in that** at least one spacer element (3) is formed by a plastic element.

4. Device for reducing the noise intensity of the mechanical brake system of the casters of hospital beds according to claim 1, **characterised in that** at least one spacer element (5) is formed by an elastic element.

5. Device for reducing the noise intensity of the mechanical brake system of the casters of hospital beds according to claim 1, **characterised in that** the spacer element (3) has two projections (8) on one side.

6. Device for reducing the noise intensity of the mechanical brake system of the casters of hospital beds according to claim 1, **characterised in that** the dimension of the spacer element (3) differs from that of the body (2) of the cam (1).

7. Device for reducing the noise intensity of the mechanical brake system of the casters of hospital beds according to claim 6, **characterised in that** the outer dimension of the spacer elements (3) is bigger than the body (2) of the cam (1) and protrudes its edge at the position of the latching recesses (6).

8. Device for reducing the noise intensity of the mechanical brake system of the casters of hospital beds according to claim 6, **characterised in that** the inner diameter of the cutout of the spacer elements (3) is smaller than the inner diameter of the central opening (4) in the body (2) of the cam (1).

## Revendications

1. Dispositif de réduction de l'intensité de bruit d'un système de freinage mécanique de roulettes de lits d'hôpital qui contient un mécanisme à levier pour le desserrage d'un frein du lit, une tige pour la transmission de force et une came (1), **caractérisé en ce que** la came (1) présente un corps (2) de la came (1) et au moins un élément d'écartement (3), dans lequel le corps (2) de la came (1) présente une ouverture médiane (4) avec au moins une entaille (5) pour la fixation au moins d'un élément d'écartement (3), et la périphérie du corps (2) de la came (1) est formée au moins par au moins une niche d'encliquetage (6) et au moins une butée (7), et en contact avec le corps (2) de la came (1) au moins un élément d'écartement (3) avec au moins une saillie (8) est nécessaire pour la fixation de l'élément d'écartement (3).

2. Dispositif de réduction de l'intensité de bruit du système de freinage mécanique de roulettes de lits d'hôpital selon la revendication 1, **caractérisé en ce que** le corps (2) de la came (1) présente une ouverture médiane (4) avec des entailles (5) qui sont agencées le long de la périphérie de l'ouverture médiane (4) de sorte que les saillies (8) de l'élément d'écartement (3) s'encliquètent dans le corps (2) de la came (1).

3. Dispositif de réduction de l'intensité de bruit du système de freinage mécanique de roulettes de lits d'hôpital selon la revendication 1, **caractérisé en ce qu'**au moins un élément d'écartement (3) est formé par un élément en matière plastique.

4. Dispositif de réduction de l'intensité de bruit du système de freinage mécanique de roulettes de lits d'hôpital selon la revendication 1, **caractérisé en ce qu'**au moins un élément d'écartement (5) est formé par un élément en matière élastique.

5. Dispositif de réduction de l'intensité de bruit du système de freinage mécanique de roulettes de lits d'hôpital selon la revendication 1, **caractérisé en ce que** l'élément d'écartement (3) présente sur un côté deux saillies (8).

6. Dispositif de réduction de l'intensité de bruit du système de freinage mécanique de roulettes de lits d'hôpital selon la revendication 1, **caractérisé en ce que** la dimension de l'élément d'écartement (3) se distingue de celle du corps (2) de la came (1).

7. Dispositif de réduction de l'intensité de bruit du système de freinage mécanique de roulettes de lits d'hôpital selon la revendication 6, **caractérisé en ce que** la dimension extérieure des éléments d'écartement (3) est supérieure au corps (2) de la came (1) et son bord dépasse à l'endroit des niches d'encliquetage (6).

8. Dispositif de réduction de l'intensité de bruit du système de freinage mécanique de roulettes de lits d'hôpital selon la revendication 6, **caractérisé en ce que** le diamètre intérieur de l'entaille des éléments d'écartement (3) est inférieur au diamètre intérieur de l'ouverture médiane (4) dans le corps (2) de la came (1).
